# EUROPEAN PATENT SPECIFICATION

(11) **EP 4 027 827 B1**
(45) Date of publication and mention of the grant of the patent: **19.02.2025**
(21) Application number: 20767828.5
(22) Date of filing: 10.09.2020
(51) Int. Cl.: A45D 1/00, C02F 1/00

(54) **DEVICE FOR FILTERING OF LIQUID AND FILLING FOR A HOUSEHOLD ELECTRICAL APPLIANCE**
VORRICHTUNG ZUM FILTERN EINER FLÜSSIGKEIT UND FÜLLUNG FÜR EIN ELEKTRISCHES HAUSHALTSGERÄT
DISPOSITIF DE FILTRATION DE LIQUIDE ET DE REMPLISSAGE POUR UN APPAREIL ÉLECTROMÉNAGER

(30) Priority: 11.09.2019 FR 1910000
(43) Date of publication of application: 20.07.2022
(73) Proprietor: L'OREAL, 75008 Paris (FR); SEB S.A., 69130 Ecully (FR)
(72) Inventor: PONCET, Stéphane, 69780 MIONS (FR); GANEM, Mathias, 69001 LYON (FR); MAISONNEUVE, Martial, 38090 VILLEFONTAINE (FR); MAITRE, Pascal, 07340 FELINES (FR); LAPIZE, Sandy, 93400 SAINT OUEN (FR); CHAMPEAUX, Mélissa, 93400 SAINT OUEN (FR)
(74) Representative: Cabinet Nony
(86) International application number: PCT/EP2020/075352
(87) International publication number: WO 2021/048289

(56) References cited:
- EP-A1- 2 449 914
- FR-A1- 3 018 031
- US-A1- 2014 102 965
- US-A1- 2016 159 662

## Description

### Technical field

The present invention relates to the field of devices for filtering and filling, in particular for filling of tanks, particularly of household electrical appliances, and preferably portable household electrical appliances, such as hairdressing appliances.

More specifically, the invention relates to the field of devices for filtering of liquid and filling for a household electrical appliance comprising:
- a main filtering device designed to filter a liquid;
- a main body comprising:
- a main tank comprising a pressing area which is deformable under manual pressure by a user;
- a duct for emptying the main tank, said emptying duct being designed to convey the filtered liquid from the main tank to a tank of a household electrical appliance when the deformable pressing area is deformed by the user. user, wherein the main tank comprises a groove which assists the deformation at the distal end

### Prior art

Many household electrical appliances need water in order to operate, in particular in order to produce steam. This is for example the case for ironing appliances (iron, steamer, etc.), but also for certain hairdressing appliances (straightener, hair curler, etc.) However, it is known that these appliances are often subject to scaling caused by the limescale contained in the water. In fact, by heating the water to transform it into steam, the appliances will solidify the limestone contained in the water, and after a certain amount of time the water will degrade the household electrical appliance, in particular by obstructing the steam extraction orifices and/or the vaporization chamber. The operation of these appliances is then degraded as a result, or sometimes becomes impossible.

In order to avoid this problem, some household appliances such as those mentioned in patent applications EP 2449 914 and FR 3 018 031 have an integrated water filtration device which makes it possible to permanently have demineralized water from tap water. Such devices are bulky and expensive due to the presence of the water filtration device.

It is also possible to use directly already demineralized water. However this solution is costly, since the user is obliged to buy this demineralized water commercially, and it is inconvenient taking into account the difference in size between the demineralized water bottles (generally 5 L) and the size of the tank of the portable household electrical appliances (generally a few tens of mL). The user is often obliged to use a funnel in order to avoid spilling water to the side when carrying out the filling.

In order to try to eliminate these disadvantages, filtering devices known as "wash bottles" exist, which can allow the user to filter the running water (from the tap) and to be able to fill the tank of his portable household electrical appliance easily and with precision. A device of this type is described for example by patent application GB780989.

Although this type of wash bottle makes it possible to use tap water, and to improve the precision of filling of the tank of the household electrical appliance, it nevertheless has certain disadvantages. In fact, the filtering system proposed by this type of appliance can filter only a small quantity of water at a time. In fact, the output flow of the filtered liquid is limited by the filtering system itself. Consequently, in order to fill the tank of a household electrical appliance, the user must sometimes carry out several operations in succession, or take several minutes for the water to be correctly filtered. Furthermore, the filling with hard (unfiltered) water of this type of wash bottle is particularly complex since the entire filtering device must be dismantled.

It is also known, in particular from patent application US2014/0102965, a bottle equipped with solar panels for purifying water with UV light. The purification is performed to make potable water from non-potable water to make it drinkable, in particular using a carbon filter. Demineralized water is not considered to be potable water as it can lead to a deficiency in mineral salts, and drinking water should not be used in household appliances as limestone will deteriorate the appliance.

There is therefore a need to improve the existing devices.

### Disclosure of the invention

The objective of the present invention is to eliminate the aforementioned disadvantages.

An objective of the invention is to propose a device for filtering and filling for a household electrical appliance which makes it possible to fill a tank of the appliance rapidly.

Another object of the invention is to propose a device for filtering and filling for a household electrical appliance which makes it possible to fill a tank of the appliance with precision.

Another objective of the invention is to propose a device for filtering and filling for a household electrical appliance which makes it possible to fill a tank of the appliance safely and easily.

Another objective of the invention is to propose a device for filtering and filling for a household electrical appliance which is simple and intuitive to use.

Another objective of the invention is to propose a device for filtering and filling for a household electrical appliance which is particularly inexpensive.

Another objective of the invention is to propose a device for filtering and filling for a household electrical appliance which is particularly reliable, robust and safe.

An objective of the invention is also to propose a method for filtering and filling of a household electrical appliance which is particularly rapid, precise, safe and easy. Another objective of the invention is to propose a method for filtering and filling of a household electrical appliance which is simple to use, inexpensive, reliable, robust and safe.

These objectives are achieved by means of a device for filtering of liquid and filling for a household electrical appliance comprising:
- a main filtering device which is designed to filter the liquid, and in particular to filter water, in particular in order to demineralize the water;
- a main body comprising:
- a main tank comprising a pressing area which is deformable under manual pressure by a user;
- a duct for emptying the main tank, said emptying duct being designed to convey the filtered liquid from the main tank to a tank of a household electrical appliance when the deformable pressing area is deformed by the user.

Thus, the device for filtering of liquid and filling which is the subject of the invention makes it possible in particular to demineralize running water, in particular that obtained from the tap, then to fill a tank of a household electrical appliance which is preferably portable, simply by pressing on, and deforming, at least part of the main tank of said device. This allows the user to make savings, since he can use running water. It also allows him to fill the tank of his household electrical appliance with precision, i.e. without loss of water or leakage, by means of simple pressure, typically by his hand, on at least part of the main tank of the device which is the subject of the invention. Thus, the ergonomics and intuitiveness are optimized.

Preferably, the device for filtering of liquid and filling is portable, i.e. it can be transported easily by the user, in particular by manipulating it by hand.

According to the invention, the main tank is situated downstream from the main filtering device, such as to receive and store the liquid filtered by said main filtering device.

As is well known, the expression "downstream" refers to after, following, whereas on the other hand the expression "upstream" refers to before, preceding.

Thus, thanks to the invention, the filtered liquid, for example demineralized water, is stored in the main tank. Thus, the device which is the subject of the invention makes it possible to constitute a reserve of filtered liquid, i.e. a reserve of liquid which is ready to use, the filtering being carried out in hidden time, and before any operation of filling of the tank of the household electrical appliance. This makes it possible to have a resulting reserve of liquid which is ready to use, and thus to fill the tank of the household electrical appliance very rapidly, or even to be able to carry out a plurality of successive filling operations of one or a plurality of household electrical appliances. Preferably, the main filtering device comprises a holding space upstream from the main tank, such as to permit storage of the liquid to be filtered.

"Holding space" means any area which makes it possible to store liquid at least temporarily, such as, for example, a tank.

This makes it possible to be able to accumulate the liquid to be filtered, such as, for example, hard water, which can be particularly loaded with limestone, and/or particularly loaded with other mineral salts, for example having a dry extract greater than 150 mg/L or 300 mg/L. By extension, without departing from the context of the invention, the expression "hard water" can designate any type of water which has not been subjected to particular treatment apart from that carried out by the water distributors so as to make it drinkable. For example, tap water can be designated thus. Thus, in order to fill the device which is the subject of the invention, the user is not obliged to remain continually below a thin trickle of water which he would make flow from his tap. On the contrary, he can fill said holding space rapidly with a substantial flow obtained from his tap, then turn the tap off without having to pay attention subsequently to the device which is the subject of the invention. In fact, the filtering will be carried out automatically, without any action by the user after he has filled the holding space.

Preferably, the emptying duct is positioned on the exterior of the main tank, which makes it possible to free space in the interior of the tank, and thus to have a reserve of filtered liquid, ready to use, which is even more consistent.

In this preferential case, the emptying duct is advantageously fastened longitudinally on the main tank by means of a fastening area. In other words, the emptying duct extends along the main tank, for example being mounted thereon. This makes it possible to obtain a device for filtering of liquid and filling which is particularly compact but also robust. In fact, if the device is dropped, the risk of breakage of the emptying duct is reduced, since the duct is adhering to the main tank. Said fastening area is preferably created by continuity of material between the emptying duct and the main tank, in particular further to an operation of molding or welding. However, it can be envisaged to create the fastening area by means of other devices known to persons skilled in the art which would be suitable for fastening the emptying duct on the main tank. According to the above preferred mode, the device for filtering and filling comprises a recess between the emptying duct and the deformable pressing area, such as to limit the deformation of the emptying duct when the deformable pressing area is deformed by the user. In other words, the emptying duct is advantageously not attached along its entire length to the main tank. For example, it can be attached to the main tank along two thirds of its length. Notably, this makes it possible to protect the emptying duct against the deformation of the main tank when the user presses the deformable pressing area, whilst nevertheless providing the duct with good mechanical strength, in particular in the case when the device is dropped, as previously stated. Any movement of the emptying duct is thus prevented when the user presses on the deformable pressing area. In other words, the emptying duct remains substantially immobile when the user presses on the device which is the subject of the invention, such that this facilitates greatly for the user the operation of filling of the tank of his household electrical appliance. In particular, this means that the user does not have to pour liquid, in this case water, from outside the tank which he wishes to fill.

For example, the recess is designed such as to leave a space of between 0.2 mm and 5 mm, and preferably substantially equal to 1.45 mm, between the emptying duct and the deformable pressing area. In fact, these dimensions make it possible to separate the emptying duct from the main tank along part of the length of the tank, whilst keeping the emptying duct in the immediate vicinity of the main tank. The fact of leaving the emptying tank in the immediate vicinity of the main tank makes it possible to improve the mechanical strength of the emptying tank, in particular if it is dropped, since the movement of the duct can then be stopped by the main tank.

The main tank extends between a proximal end forming a support surface for the main tank, and an opposite distal end. In other words, the main tank comprises a proximal end which comprises a substantially flat surface such as to form a support surface, i.e. a surface thanks to which a user can place the main tank on a work surface, such as a table for example. Preferably, the main tank has a form of revolution, in particular the form of a cylinder, and the proximal end, or the support surface, is formed by the base of the cylinder. The main tank then comprises an end opposite the support surface, said opposite end being in particular able to be designed to receive a stopper, as will be described hereinafter. According to the preceding preferred embodiment, the recess extends from the distal end to the fastening area. Thus, preferably, the fastening area extends from the proximal end in the direction of the distal end, or also in the direction of the recess.

Advantageously, the recess extends over a length of between 2 mm and 114 mm, and is preferably equal to 25 mm. In fact, these dimensions have been calculated by the designers of the invention such as to propose the best possible compromise between mechanical strength of the emptying duct and independence thereof relative to the main tank, the relative independence of this tank guaranteeing the immobility of the emptying duct when the user presses the deformable pressing area.

Preferably, the main tank comprises an area which assists the deformation at the distal end. Preferably, the area which assists the deformation is a groove, and preferably a circular groove. In other words, in the vicinity of the distal end, the main tank comprises a hollow area which makes it possible to facilitate the deformation of the deformable pressing area, which therefore limits the force which the user must apply on the deformable pressing area, i.e. on the main tank. This therefore facilitates the discharge of the liquid contained in the interior of the main tank. The ergonomics and the ease of use of the device which is the subject of the invention are thus improved.

For example, the groove has a depth of between 0.5 mm and 13 mm, and is preferably equal to 2.5 mm. In fact, these dimensions have been optimized by the designers of the invention such as to propose the best possible compromise between flexibility and mechanical strength of the main tank.

Advantageously, the main tank comprises an area of reinforcement at the distal end. This area of reinforcement makes it possible to improve the mechanical strength of the main tank, and, in particular, in the preceding preferential case where the tank comprises an area which assists the deformation, to control the deformation of the main tank and to create an area free from deformation. In particular, it is particularly advantageous when the distal end receives a stopper, in order to preserve good sealing at this end. Preferably, the area of reinforcement is in contact with the area which assists the deformation, the reinforcement area advantageously being designed to be in contact with a stopper.

According to one embodiment, the main filtering device comprises an input grid which is designed to receive the liquid to be filtered, and a dissipater which is designed to distribute the liquid to be filtered over the entire surface of the input grid. In other words, the filtering device comprises a device which is designed to distribute well the incoming flow of water, i.e. the flow of water to be filtered, over the entire input section of the filtering device. This makes it possible to use well the entire capacity of the filtering device and therefore to limit the filtering time and therefore to limit the time of filling of the main tank. The dissipater is advantageously positioned in the interior of the holding space of the main filtering device.

Advantageously, the emptying duct comprises an emptying spout which is designed to come into contact with a liquid tank of the household electrical appliance, said emptying spout comprising a filtering device. For example, the emptying spout can be formed by a cone or truncated cone, in the manner of a funnel, such as to facilitate the insertion thereof in an orifice of the tank of the household electrical appliance. Preferably, at least one diameter of the cone or truncated cone of the pouring spout is substantially equal to the diameter of the input orifice of the tank of the household electrical appliance. This therefore assures good sealing during filling of the tank. However, the use of this type of emptying spout is liable to create complete sealing (i.e. against both the liquid and the air), between the emptying duct of the device which is the subject of the invention and the tank of the household electrical appliance. Although sealing of this type is beneficial as far as the liquid is concerned, in order to prevent any loss of liquid, it is nevertheless detrimental as far as filling of the tank of the household electrical appliance is concerned. In fact, the tank will be subjected to excess pressure as the filling takes place, taking into account the liquid which is added in the interior of the tank. It will then become increasingly difficult for the user to fill the tank of the household electrical appliance, with the result that, at a given moment, the pressure will be such that the emptying spout will be expelled from the tank of the household electrical appliance. This will then result in overflow of liquid from the tank of the household electrical appliance. In order to prevent this phenomenon, the emptying spout advantageously comprises a venting device which is designed to allow air to pass between said emptying spout and said tank of the household electrical appliance. This device can moreover constitute a separate invention. For example, said venting device can comprise an opening provided radially in the emptying spout. Preferably the opening can be a slot which extends longitudinally on the emptying spout.

The objectives are also achieved by means of a household electrical appliance comprising a liquid vaporization device connected to a tank of liquid to be vaporized and a device for filtering of liquid and filling for a household electrical appliance, comprising:
- a main filtering device which is designed to filter a liquid, and in particular to filter water, in particular in order to demineralize the water;
- a main body comprising:
- a main tank comprising a pressing area which is deformable under manual pressure by a user;
- a duct for emptying the main tank, said emptying duct being designed to convey the filtered liquid from the main tank to a tank of a household electrical appliance when the deformable pressing area is deformed by the user.

According to the invention, the main tank is situated downstream from the main filtering device, such as to receive and store the liquid filtered by said main filtering device.

It will be appreciated that the device for filtering of liquid and filling which the household electrical appliance comprises can have, independently or in combination, one or a plurality of the characteristics previously described.

Thus, the device for filtering of liquid and filling is designed to cooperate, at least temporarily, with the household electrical appliance, and more specifically with a tank of the household electrical appliance, as has previously been explained.

The device for filtering of liquid and filling can equally well be connected or not connected to the household electrical appliance. In other words, the device for filtering of liquid and filling can be connected to the household electrical appliance for example by means of a cable, a chain, or a pipe. It is conceivable for example for the device for filtering of liquid and filling to be connected hydraulically to the tank of liquid to be filtered of the household electrical appliance by means of a pipe, such as to facilitate the filling of the tank. On the other hand, the device for filtering of liquid and filling can be independent from the household electrical appliance, and thus form an accessory for the user, in particular for a hairdresser, when the household electrical appliance in question is a hairdressing appliance. The device for filtering of liquid and filling then comes temporarily into contact with the tank of liquid to be vaporized.

"Vaporization device" means any device which can subject a liquid to a change of state, making it go from the liquid state to the gaseous state. Preferably, the vaporization device comprises a vaporization chamber which, under the action of heat, will transform the liquid into gas. Preferably, the liquid in question is water.

Advantageously, the household electrical appliance is a hairdressing appliance, and in particular a steam straightener. Thus, the household electrical appliance preferably also comprises a first arm comprising a first contact surface, which is advantageously heating, which surface is designed to come into contact with a lock of hair, and a second arm comprising a second contact surface, which is advantageously heating, which surface is designed to come into contact with the lock of hair, said first and second arms being articulated to one another such as to form a smoothing tong. Smoothing appliances of this type, which are generally known as smoothing tongs, or simply smoothers, are well known to persons skilled in the art, and will therefore not be described further here

Preferably, said vaporization device is incorporated in said first arm and/or said second arm.

Advantageously, the tank of liquid to be vaporized is incorporated in said first arm and/or said second arm.

Preferably, the vaporization device and the tank of liquid to be vaporized are incorporated in said first arm and/or said second arm.

The objectives are also achieved by means of a method for filtering of a liquid and filling of a household electrical appliance comprising the following steps:
a) a liquid to be filtered passes through a main filtering device such as to be filtered;
b) a user presses a deformable pressing area of a main tank, such as to convey the liquid contained in the main tank to a tank of a household electrical appliance thanks to an emptying duct, the emptying duct and the main tank advantageously being incorporated in a main body of a device for filtering of liquid.

According to the invention, the step b) is preceded by a step i) during which:
the liquid filtered by the main filtering device is received and stored by the main tank, said main tank being situated downstream from the main filtering device.

Preferably, the step a) is preceded by a step ii) during which:
the liquid to be filtered is poured into a holding space upstream from the main tank, such as to permit the storage of the liquid to be filtered.

### Brief description of the drawings

[Fig 1] Figure 1 is a view in perspective of a device for filtering of liquid and filling according to the invention.
[Fig 2] Figure 2 is a view similar to figure 1, but from which the stopper of the device has been removed.
[Fig 3] Figure 3 is a view in longitudinal cross-section of the device for filtering of liquid and filling in figure 2.
[Fig 4] Figure 4 is a view in perspective and in longitudinal cross-section of the main filtering device of the device for filtering of liquid and filling in the preceding figures.

### Description of the embodiments

The embodiment of the invention illustrated by the different figures is an embodiment in which the device for filtering of liquid and filling is proposed for the filling of a hairdressing device, for example a steam smoother.

The term "liquid" thus advantageously designates water, in this case hard water, in particular running water obtained from the tap, which the device which is the subject of the invention will filter, in particular in order to remove the limestone therefrom. In fact, limestone is detrimental for the satisfactory operation of household electrical appliances, and it is advisable to use demineralized water (as opposed to hard water), or at least water containing the least possible limestone. It will be understood however that the term "liquid" is not limited to water, but can also concern other types of liquids, without departing from the context of the invention.

Thus, the capacity of said device is designed such as to be able to guarantee to the user a plurality of successive fillings of his hairdressing appliance from a single filling of the filtering device defined by the invention. In fact, this is particularly valuable for hairdressers who use the hairdressing appliance several times a day. For example, the volume of filtered liquid supplied by the device which is the subject of the invention can be calculated such as to be able to ensure several complete hairdressing sessions, for example between 3 and 10.

As can be seen in the different figures, the device for filtering of liquid and filling for a household electrical appliance comprises a main filtering device 3 which is designed to filter a liquid. In particular, the main filtering device 3 is thus designed to filter water, at least such as to decrease significantly the limestone content thereof.

"Limestone" means not only the calcium carbonate contained in the water, but also, by extension, all of the mineral salts which water can contain, and which tend to be precipitated into solid form when the water is heated, in particular at its boiling point. Thus, the main filtering device 3 will receive hard water, i.e. unfiltered water, for example obtained from the tap, in order to supply filtered water, in particular with a limestone content which is greatly reduced, if not zero, thus approximating a demineralized water.

The main filtering device 3 comprises a filtering tank 34 which is designed to contain a filtering element 341, for example a resin, which can interact mechanically and/or chemically with the liquid to be filtered. For example, the filtering element 341 can comprise a plurality of balls, such as to create a mechanical filter to block the largest molecules in the interior of the liquid, and thus create mechanical filtering. The filtering element 341 can also comprise chemical elements which react in particular in contact with the mineral salts contained in the liquid, in this case in the hard water, such as to dissolve these salts, thus creating chemical filtering of the liquid. Devices of this type are well known as such, and will not be described further here.

The filtering device, in this case the filtering tank 34, comprises an input grid 345 and an output grid 346, through which respectively the liquid to be filtered enters and the filtered liquid exits. Said input grid 345 and output grid 346 advantageously make it possible to filter the liquid mechanically, and thus prevent coarse foreign bodies (dust, pebbles, grass, etc.) from penetrating into the interior of the filtering tank 34 and the filtering element 341. Said input grid 345 and output grid 346 also make it possible to retain the filtering element 341 in the interior of the filtering tank 34, irrespective of the orientation of the filtering tank 34.

The filtering tank 34 has a cylindrical form, and said input grid 345 and output grid 346 thus form the ends of the filtering tank 34, and therefore each have the form of disks. The main filtering device 3 comprises a holding space 31, i.e. a buffer area, such as to permit storage of the liquid to be filtered, at least temporarily. In other words, the main filtering device 3 comprises an inner tank which acts as a buffer tank, until the liquid to be filtered is filtered by the filtering element 341.

In fact, the filtering element 341 is situated downstream from the holding space 31, such that the holding space makes it possible to store the liquid to be filtered, in this case the hard water to be filtered, until the liquid flows gradually through the filtering element 341, i.e. it passes through the main filtering device 3. This allows the user not to have to calculate the speed of filling of the device which is the subject of the invention according to the speed of filtering of the main filtering device 3. On the other hand, thanks to the holding space 31, the user can fill the device rapidly and in a single go, since the surplus liquid which cannot be filtered in real time by the main filtering device 3 will be stored automatically in the holding space 31. The user can thus then position the device which is the subject of the invention on a table, and leave the device to operate by itself: as the liquid flows through the main filtering device 3, the liquid held in the holding space 31 will flow, thus supplying the filtering element 341 continually, without intervention by the user. This facilitates the use and ergonomics of the device which is the subject of the invention.

The holding space 31 has a cylindrical form, and its volume makes it possible for example to store between 50 cm³ and 500 cm³, for example approximately 144 cm³, this volume having been calculated in order to comply with the constraints of usage previously mentioned (use by hairdressers and automatic filtering).

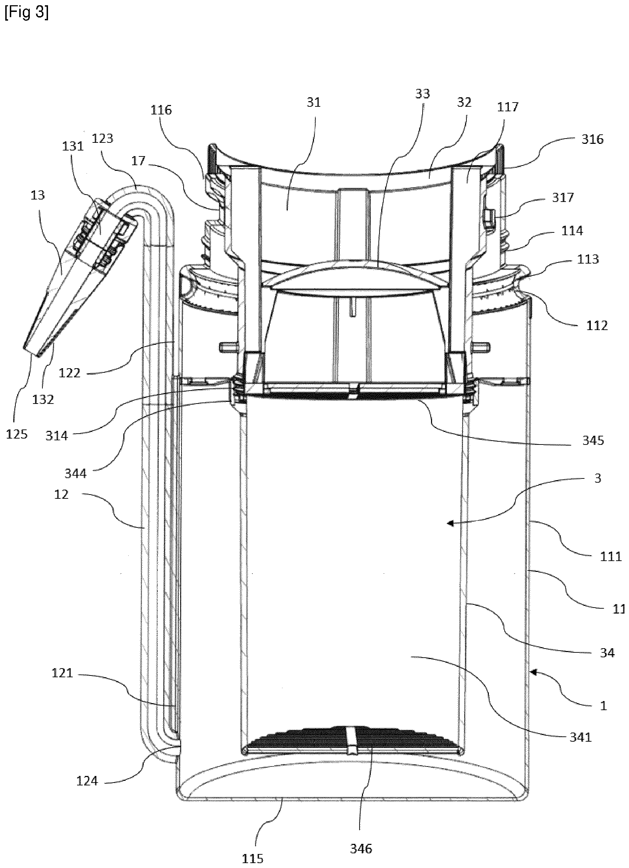

As can be seen in figure 3, the holding space 31 comprises a first assembly device 314 which is designed to correspond to a first complementary assembly device 344 belonging to the filtering tank 34, making it possible to assemble the holding space 31 and the filtering tank 34.

Preferably, said first assembly device 314 and first complementary assembly device 344 comprise a screw/nut system, i.e. an assembly which can be dismantled, but they can also comprise a clipping system, i.e. an assembly which can not be dismantled. A combination of this type makes it possible to ensure good sealing and good mechanical strength between the holding space 31 and the filtering tank 34 (screw/nut system), whilst preventing the user from dismantling said assembly (clipping system), and therefore preventing the user from losing the filtering element 341 contained in the filtering tank 34. In fact this is particularly advantageous when the filtering element 341 is formed by a multitude of small balls. However, without departing from the context of the invention, it would be possible to conceive of use of an assembly which can be dismantled between the filtering tank 34 and the holding space 31, which would optionally allow the user to carry out maintenance operations only on the filtering tank 34 (cleaning of the input grid 345 and output grid 346, replacement of the filtering element 341, etc.), without having to change the holding space.

As can be seen, the main filtering device 3 comprises an input orifice 32, which is designed to receive the liquid to be filtered, and which orifice preferably has a circular form. It is thus through this input orifice 32 that the liquid to be filtered is poured by the user, in this case hard water obtained from the tap. This allows said liquid to be located in the holding space 31, then to pass through the input grid 345, and then through the filtering element 341.

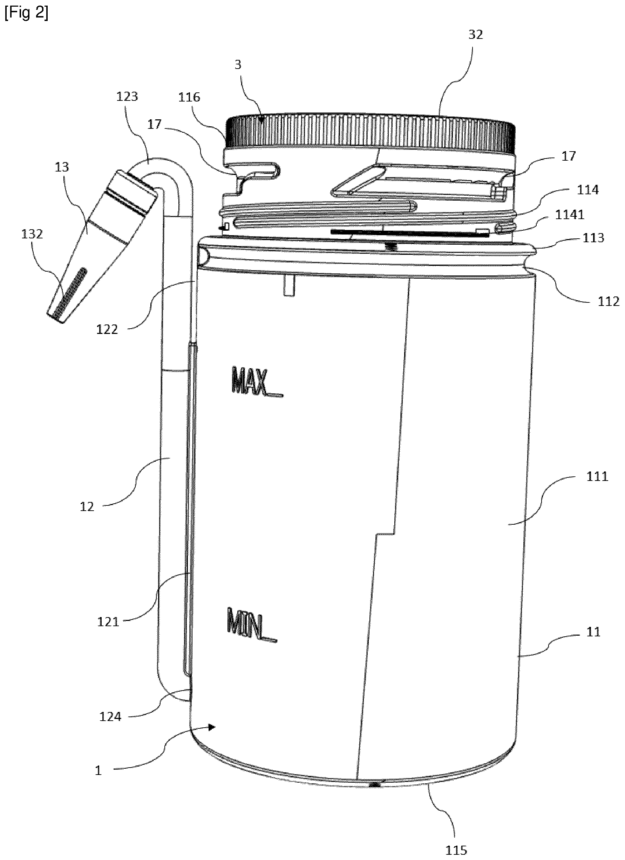

As can be seen in figures 2 and 3, the main filtering device 3 also comprises an assembly means 317 which is designed to correspond with a complementary assembly means 17 belonging to a main body 1. In this case, the assembly means 317 and the complementary assembly means 17 form an assembly of the bayonet type, using respectively lugs and channels, and ensuring the blocking between the main filtering device 3 and the main body 1 when a quarter of a turn is implemented between the main filtering device 3 and the main body 1.

The main filtering device 3 also comprises a dissipater 33, which is designed to distribute the liquid to be filtered over the entire surface of the input grid 345. Its function is to distribute the flow of liquid to be filtered well over the entire cross-section of the input grid 345, i.e. to use all of the filtering capacities of the main filtering device 3. This makes it possible to optimize the filtering of the liquid, to limit the filtering time by using the entire filtering capacity, and also not to always use the same portion of the filtering element 341, as could unfortunately be the case without the presence of a dissipater 33 of this type. Thus, the filtering element 341 wears uniformly, and the interval between maintenance operations is substantially increased.

The dissipater 33 has a convex form on which there is poured the liquid to be filtered, in this case water flowing from the tap. The convex form, for example a form substantially similar to an umbrella, will thus break up the trickle of liquid so as to distribute it well over the entire cross-section of the input orifice 32. In addition, a dissipater 33 of this type makes it possible to limit the height of fall of the liquid (in particular from the tap), thus protecting the filtering element 341 against any deterioration which could be caused by the pressure of the liquid.

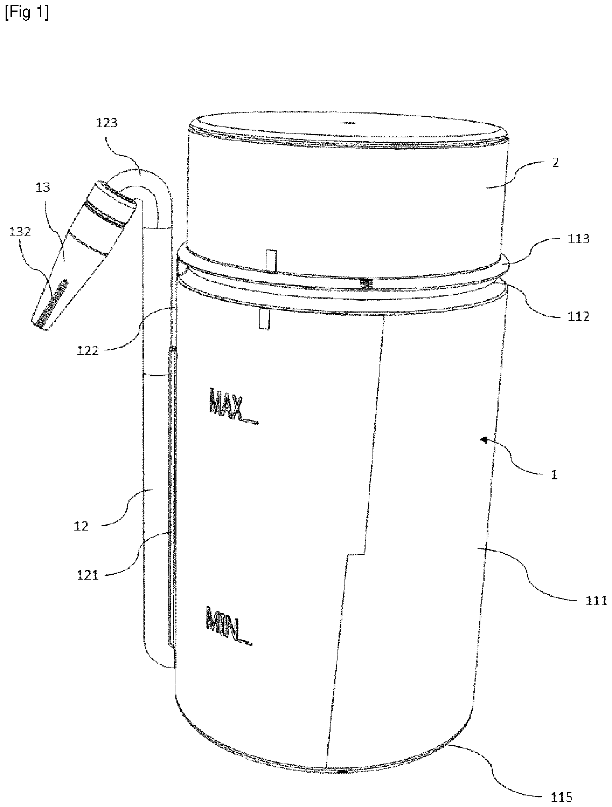

As can be seen in figures 1 to 3, the device for filtering of liquid and filling for a household electrical appliance comprises a main body 1. The main body 1 is then designed to receive and retain the main filtering device 3.

The main body 1 itself comprises a main tank 11. The expression "tank" designates any sealed container which can receive and retain liquid in its interior. The main tank 11 is substantially rigid, i.e. it has mechanical strength, and it is not limp, including when it is empty. As can be seen, the main tank 11 has a form of revolution, in this case the form of a cylinder, this form having in particular the advantage of being relatively ergonomic (a cylinder can be grasped with a hand), in particular because it is reminiscent of the form of water bottles. The main tank 11 has a diameter of approximately 87 mm for a length (or height, according to the vertical tank illustrated in the figures) of approximately 132 mm. The volume of the main tank is for example between 50 cm³ and 500 cm³, and is for example approximately 355 cm³.

As illustrated, the main tank 11 is situated downstream from the main filtering device 3, such as to receive and store the liquid filtered by said main filtering device 3. In other words, the main tank 11 is designed to contain filtered liquid, i.e. liquid flowing from the main filtering device 3. Thus, during operation of the device according to the invention, the main tank 11 receives and stores filtered liquid (such as, for example, demineralized water), and not liquid to be filtered (such as, for example, hard water). According to the direction of flow of the liquid, the main tank 11 is thus situated after the main filtering device 3, i.e. after the filtering element 341.

The main tank 11 is also situated downstream from the holding space 31. In other words, the holding space 31 is situated upstream from the main tank 11, i.e. before the main tank 11, but also before the filtering element 341, such that, in operation, the holding space 31 receives hard water, i.e. water which has not yet been filtered.

As can be seen in figures 1 to 3, the main tank 11 extends between a proximal end 115 forming a support surface for placing the main tank 11 for example, and an opposite, distal end 116. In other words, the proximal end 115 of the main tank 11 is a substantially flat surface, such as to be able to act as a support surface and contact surface for the main tank 11 when this tank is placed on a work surface, such as a table for example.

In the embodiment illustrated, the proximal end 115 thus has the form of a solid disk which ensures good stability for the main tank 11, and thus for the main body 1 of the device according to the invention. In other words, the proximal end 115 constitutes the base of the main tank 11.

For its part, the distal end 116 is opposite the proximal end 115. As can be seen, the distal end 116 is in the form of a hollow disk, i.e. a crown, and thus constitutes the opening of the main tank 11.

As will be described hereinafter, the distal end 116 is designed to receive a stopper 2, such as to close the main tank 11 hermetically.

The distal end 116 is also designed to receive and retain the main filtering device 3, as can be seen in figure 3. In fact, the main filtering device 3 is positioned in the interior of the main tank 11. As can be seen, the input orifice 32 has a cross-section, in this case a diameter, larger than that of the main filtering device 3 as a whole. This makes it possible firstly to facilitate the filling of the holding space 31, but also to form a shoulder 316 for the main filtering device 3.

In fact, as illustrated, this shoulder 316 will be supported on the distal end 116, which makes it possible to retain the main filtering device in position in the interior of the main tank 11, and prevent the device from falling to the base of the tank under its own weight. In fact, it is important to keep a free space between the base of the main tank 11, i.e. the proximal end 115, and the base of the filtering tank 34, i.e. the output grid 346, quite simply to ensure that the filtered liquid flows well after it has passed through the filtering element 341.

The shoulder 316 also makes it possible to ensure the sealing between the main filtering device 3, more specifically the holding space 31, and the main tank 11.

The main tank 11 comprises a pressing area 111 which is deformable under manual pressure by a user. In other words, although the main tank 11 is rigid, it remains temporarily resiliently deformable, and in particular deformable by the user. This deformation makes it possible to empty the main tank 11, i.e. to extract the liquid, in this case the filtered water, which it contains. It is the user who will control the emptying of the main tank 11 directly by pressing, i.e. by exerting pressure in particular by means of his hand, on an area provided for this purpose, i.e. the deformable pressing area 111.

As can be seen, the deformable pressing area 111 is formed by the lateral walls of the cylinder formed by the main tank 11. Thus, the emptying of the main tank 11 operates according to the well-known and highly intuitive principle of a wash bottle: in order to discharge the liquid contained in the interior of the tank, it is sufficient to press on the tank such as to deform it. In fact, the deformation of the deformable pressing area 111 will decrease the internal volume of the main tank 11, and consequently the internal pressure will increase, which will expel the liquid contained in the interior of the main tank 11. The deformable pressing area 111 is a resilient area, i.e. which regains its original form after deformation of the main tank 11.

As can be seen in figure 3 in particular, the main tank 11 comprises an area which assists the deformation 112 at the distal end 116. Thus, the area 112 which assists the deformation is situated in the vicinity of the distal end 116, i.e. it is situated closer to the distal end 116 than to the proximal end 115.

More specifically, the area 112 which assists the deformation is a groove, and preferably a circular groove. The area 112 which assists the deformation is thus a hollow provided all around the main tank 11. The hollow formed by the groove will thus decrease the mechanical resistance of the main tank 11 locally, in particular the resistance to compression, such that this will facilitate the deformation of the deformable pressing area 111. Thus, the force required from the user in order to deform said deformable pressing area 111 is minimized. In addition, the presence of the area 112 which assists the deformation will make it possible to delimit the deformable pressing area 111, both from a mechanical point of view and also from a visual point of view, for the user, by suggesting to him the area which is easiest to deform.

As can be seen in figure 3, said groove has a cross-section in the form of an arc of a circle, i.e. the base of the groove is rounded. The groove preferably has a diameter of 5 mm (which corresponds to a depth of 2.5 mm). These dimensions have been determined in order to provide the best compromise between ease of deformation of the deformable pressing area 111 and general mechanical strength of the main tank 11.

The figures also show that the main tank 11 comprises a reinforcement area 113 at the distal end 116. Thus, the reinforcement area 113 is situated in the vicinity of the distal end 116, i.e. it is situated closer to the distal end 116 than to the proximal end 115. More specifically, the reinforcement area 113 is a rib, i.e. an element in relief, projecting from the wall of the main tank 11. The rib thus projects radially from the lateral wall of the main tank 11.

More specifically, the reinforcement area 113 is in contact with the area 112 which assists the deformation, which in this case is situated just above the area 112 which assists the deformation, i.e. the reinforcement area 113 is situated between the area 112 which assists the deformation and the distal end 116. Said reinforcement area 113 thus constitutes an element, the mechanical strength of which, and in particular the rigidity of which, is increased, thus making it possible to delimit well the deformable pressing area 111, and therefore stop the deformation of the main tank 11 with precision, in a location which is specific, controlled and determined in advance, when the user presses the deformable pressing area 111. In particular, this allows the distal end 116 to remain firmly rigid, i.e. not to be deformed, thus making it possible to deform the stopper 2 which it receives, and thus ensure perfect sealing. The rigidity of the distal end 116 is also primordial for ensuring the good retention, i.e. for supporting the weight, of the main filtering device 3, as previously explained.

The main body 1 also comprises a duct 12 for emptying the main tank 11. "Emptying duct" means any duct, pipe, channeling, etc., which makes it possible to transport a fluid. Said emptying duct 12 is thus designed to convey the filtered liquid from the main tank 11 to a tank of a household electrical appliance when the deformable pressing area 111 is deformed by the user.

As can be seen in the different figures, the emptying duct 12 is positioned on the exterior of the main tank 11. This makes it possible to free space in the interior of the main tank 11, and thus increase the capacity thereof. The user therefore benefits from a larger reserve of filtered liquid, which is beneficial for the aforementioned usages. The emptying duct 12 is fastened longitudinally on the main tank 11 by means of a fastening area 121, preferably by continuity of material. As can be seen in figure 3, the fastening area 121 thus makes it possible to connect, fasten or attach the emptying duct 12 on the lateral wall of the main tank 11. Thus, the emptying duct 12 extends parallel to the main tank 11, i.e. the emptying duct 12 extends along the main tank 11. This makes it possible to maintain a device which is relatively compact and solid in that, if it is dropped, the emptying duct 12 continues to be protected by the main tank 11.

The emptying duct 12 extends between a first end 124 which is fastened on the main tank 11 in a sealed manner, such as to receive the filtered liquid therefrom, and a free end 125 which acts as an emptying orifice, and makes it possible to fill the tank of the household electrical appliance

It will then be noted that the fastening area 121 does not extend along the entire length of the emptying duct 12. In fact, the fastening area 121 extends from the first end 124 in the direction of the free end 125 over approximately two thirds of the length of the emptying duct 12. Thus, the device for filtering and filling comprises a recess 122 between the emptying duct 12 and the deformable pressing area 111. "Recess" means a space or a gap, i.e. the emptying duct 12 is not fastened locally on the main tank 11, as can be seen in figure 3. This therefore makes it possible to keep the emptying duct 12 separate from the main tank 11, and in particular the deformable pressing area 111, such as to limit the deformation of the emptying duct 12 when the deformable pressing area 111 is deformed by the user. This therefore prevents the emptying duct 12, and in particular its free end 125, from moving too much during filling of the tank of the household electrical appliance, thus facilitating this operation.

As can be seen, the recess 122 extends from the distal end 116 to the fastening area 121, i.e. the recess 122 is provided in the upper part of the main body 1, if the direction in figure 3 is taken into consideration. For example, the recess 122 extends over a length of between 5 mm and 75 mm, and is preferably equal to 25 mm from the distal end 116. The recess 122 is preferably designed such as to leave a space which is preferably substantially equal to 1.45 mm between the emptying duct 12 and the deformable pressing area 111.

As illustrated, the emptying duct 12 comprises a bend 123 which allows the emptying duct 12 to be moved away from the main tank 11. This is important for the general ergonomics of the device. In fact, the bend 123 makes it possible to orient the free end 125 in an optimal direction for filling the tank of the household electrical appliance without having to overturn or even excessively incline the main body 1 of the device. Finally, as can be seen by consulting figures 1 to 3, the emptying duct 12 is in the form of a swan-neck relative to the main body 1.

The emptying duct 12 comprises an emptying spout 13 which is designed to come into contact with a tank for liquid of the household electrical appliance. As can be seen, the emptying spout 13 is an element with a cross-section larger than the cross-section of the emptying duct 12, and is positioned at the free end 125, more specifically at least around the free end 125. The emptying spout 13 in this case has the form of a truncated cone, which makes it possible to easily insert the emptying spout 13 and thus the free end 125 in the interior of the tank to be filled of the household electrical appliance. In addition, the form of a truncated cone of the emptying spout 13 will ensure reliable sealing between the orifice of the tank to be filled of the household electrical appliance and the emptying duct 12. This will therefore facilitate filling of the tank for the user, whilst avoiding any untimely escape of liquid.

However, and this could constitute a separate invention, the sealing formed between the emptying spout 13 and the tank of the household electrical appliance can be detrimental. In fact, as explained, as the user fills the tank of his household electrical appliance, the pressure in the interior of this tank will increase, with the result that it will be increasingly difficult for the user to continue with his filling. This will in particular require the user to exert greater pressure on the deformable pressing area 111, and will also tend to eject the emptying spout 13 from the tank of the household electrical appliance, thus giving rise to a loss of liquid from the appliance. In order to avoid these disadvantages, the emptying spout 13 comprises a venting device 132, which is designed to allow air to pass between said emptying spout 13 and said tank of the household electrical appliance. The venting device 132 comprises in particular a slot, in this case two slots, which are diametrically opposite one another, extending longitudinally from the free end 125 in the direction of the bend 123. However, said slots do not extend over the entire length of the emptying spout 13, but only over a part of its length, over half of its length for example. This makes it possible to maintain the tank of the household electrical appliance to be filled at atmospheric pressure, including during its filling by the emptying spout 13. In addition, the venting device 132 allows the main tank 11 to aspirate air when the user releases the pressure on the deformable pressing area 111 via the free end 125, without having to extract this end from the tank of the household electrical appliance during filling. This aspiration of the air allows the main tank 11 to regain its initial form. It is thus possible for the user to exert new pressure on the deformable pressing area in order to eject water once more via the free end 125, and thus continue the filling of the tank of the household electrical appliance, without needing to extract the emptying spout 13 from the tank of the household electrical appliance. This allows the user to gain in terms of ergonomics and filling time by rapidly concatenating the pressure operations on the deformable pressing area in order to empty the main tank 11. Finally, the venting device 132 prevents any risk of accidental aspiration of the liquid present in the tank of the household electrical appliance, when the pressure is released on the deformable pressing area 111, i.e. when the main tank 11 regains its initial form, and therefore aspirates air as required via the free end 125.

The emptying spout 13 can also comprise a filtering device 131 as can be seen in figure 3. This filtering device 131 can for example comprise a strainer, and makes it possible to trap any impurities which could be in the liquid extracted from the main tank 11. In particular, the filtering device 131 is designed to trap particles from the filtering element 341 which could have escaped from the filtering tank 34. Thus, it is ensured that the liquid which is conveyed to the tank of the household electrical appliance is free from any impurities which could detract from the satisfactory operation of the appliance.

The device for filtering of liquid and filling also comprises a stopper 2 as can be seen in figure 1. This stopper 2 is removable, such as to be able to be fitted and dismantled as required by the user, on or off the main tank 11. For this purpose, the main tank 11 comprises a second assembly device 114 at the distal end 116, i.e. in the vicinity thereof. This second assembly device 114 is thus designed to cooperate with a second, complementary assembly device belonging to the stopper 2, such as to form an assembly which is temporary, i.e. which can be dismantled. In this case, the assembly in question is an assembly of the screw/nut type, i.e. the main tank 11 comprises a thread provided at the distal end 116, whereas the stopper 2 comprises tapping. Thus, the stopper 2 can be screwed onto the distal end 116. It is possible however to conceive of other mechanisms for assembly of the stopper 2 on the distal end 116, without departing from the context of the invention.

Once the stopper 2 has been fitted on the distal end 116 of the main tank 11, it comes into contact with the main filtering device 3. More specifically, the stopper 2 is supported on the input orifice 32 of the main filtering device 3. Thus, the shoulder 316 is wedged between the distal end 116 and the stopper 2, which ensures total immobilization of the main filtering device 3. As previously explained, the good mechanical strength of the distal end 116 is then important for ensuring satisfactory assembly of the device which is the subject of the invention.

In addition to the retention in position of the main filtering device 3 in the interior of the main tank 11, the stopper 2 contributes towards the sealing of the device according to the invention by preventing any leakage of liquid via the input orifice 32, by blocking the orifice. This is particularly useful in the case of accidental overturning of the device, in particular when the user has just filled the holding space 31.

A principle of double sealing is also ensured at the second assembly device 114 and the second complementary assembly device. In fact, a sealing element 1141, for example an O-ring seal, can be positioned at this level, between the main body 1 and the stopper, such as to seal the assembly formed by the second assembly device 114 and the second complementary assembly device. This makes it possible to double the sealing, and thus to limit any risk of leakage of liquid, including in the case of overturning of the wash bottle, but also to prevent any involuntary venting of the main tank 11 during the pressing on the deformable pressing area 111, which involuntary venting could for example be caused by the deformation of the distal end 116 after the pressing on the deformable pressing area 111, and which would then make it impossible to expel filtered liquid contained in the main tank 11, as will be explained hereinafter.

Thus, by removing the stopper 2 of the device for filtering of liquid and filling which is the subject of the invention, the user can carry out two main operations, i.e. filling the holding space 31 with hard water, and thus starting a filtering cycle, but also removing the main filtering device 3 from the main tank 11 in order to proceed with different maintenance operations, i.e. cleaning or replacement of the main filtering device 3, cleaning of the main tank 11, etc.

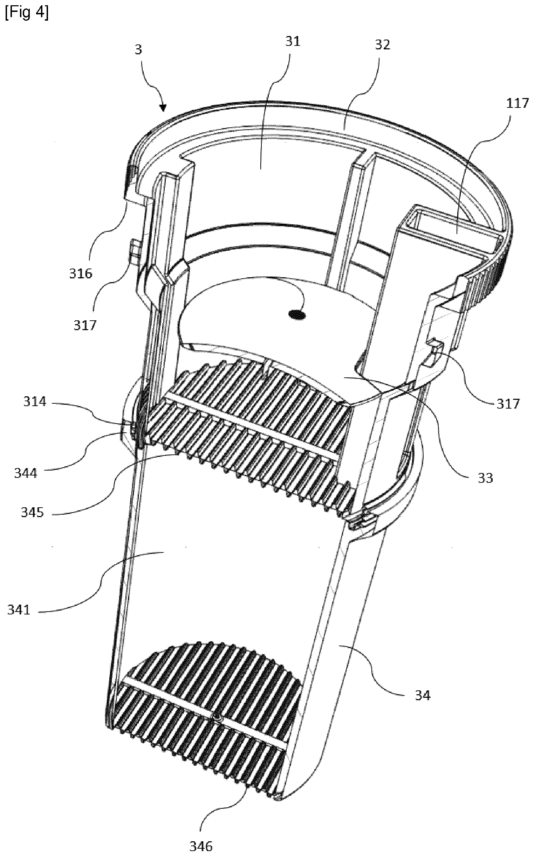

In order to maintain the main tank 11 at atmospheric pressure when it is filled with water to be filtered (with hard water), the device which is the subject of the invention comprises a means 117 for venting the main tank 11, shown in figures 3 and 4. More specifically, the venting means 117 comprises a vent which makes it possible to put the filtering tank 34, and consequently the main tank 11, into communication with the atmosphere, such as to discharge the air from the main tank automatically as it is filled. The venting means 117 opens at the input orifice 32, as can be seen in said figures.

Thus, when the stopper 2 is put into place, the venting means 117 is no longer in communication with the atmosphere, in other words the filtering tank 34, but also the main tank 11, are isolated from the atmosphere. This means that, when the user presses on the deformable pressing area 111, there will be a decrease in the volume available, and thus an increase in the pressure, which will have the effect of expelling the liquid (in this case the filtered water) contained in the main tank 11 to the exterior, by means of the emptying duct 12. Once the desired volume of filtered liquid has been extracted, when the pressure on the deformable pressing area 111 ceases, the main tank will once more be in communication with the atmosphere, thanks to the free end 125, which allows air to penetrate once more into the interior of the main tank 11, and thus allow the deformable pressing area 111 to regain its initial form. This operating principle is in reality a well-known principle which governs the functioning of the different filling bottles which may be known.

Thus, the direction of flow of the liquid is as follows: input orifice 32, holding space 31 and dissipater 33, input grid 345, filtering element 341 and filtering tank 34, main tank 11, emptying duct 12, emptying spout 13, tank of the household electrical appliance. In addition, the invention also relates to a method as such for filtering a liquid for the purpose of filling a household electrical appliance, comprising the following steps:
- a liquid to be filtered is poured into a holding space 31 upstream from the main tank 11, such as to permit the storage of the liquid to be filtered;
- the liquid to be filtered passes through a main filtering device 3 such as to be filtered;
- the liquid filtered by the main filtering device 3 is received and stored by a main tank 11, said main tank 11 being situated upstream from the main filtering device 3;
- a user presses a deformable pressing area 111 of the main tank 11, such as to convey the liquid contained in the main tank 11 to a tank of a household electrical appliance, thanks to an emptying duct 12, the emptying duct 12 and the main tank 11 being contained in the main body 1 of a device for filtering of liquid;
the preceding steps being carried out in the order indicated.

## Claims

1. A device for filtering of water and filling for a household electrical appliance comprising:
- a main filtering device (3) designed to demineralize the water;
- a main body (1) comprising:
- a main tank (11) comprising a pressing area (111) which is deformable under the manual pressure by a user;
- a duct (12) for emptying the main tank (11), said emptying duct (12) being designed to convey the demineralized water from the main tank (11) to a tank of a household electrical appliance when the deformable pressing area (111) is deformed by the user,
**characterized in that** the main tank (11) is situated downstream from the main filtering device (3), such as to receive and store the water demineralized by said main filtering device (3), the main filtering device (3) comprising a filtering tank (34), the filtering tank (34) comprising a filtering element (341) which is configured to interact mechanically and/or chemically with the water to be filtered to reduce limestone content in the water, an input grid (345) and an output grid (346) through which respectively the water to be demineralized enters the filtering tank and the demineralized water exits the filtering tank, wherein the main tank (11) extends between a proximal end (115) forming a support surface for the main tank (11) and a distal end (116) opposite, the main tank (11) comprising a groove which assists the deformation (112) at the distal end (116).

2. The device for filtering of liquid and filling for a household electrical appliance as claimed in claim 1, wherein the main filtering device (3) comprises a holding space (31) upstream from the main tank (11) such as to permit storage of the liquid to be filtered.

3. The device for filtering of liquid and filling for a household electrical appliance as claimed in any one of the preceding claims, wherein the emptying duct (12) is positioned on the exterior of the main tank (11).

4. The device for filtering of liquid and filling for a household electrical appliance as claimed in the preceding claim, wherein the emptying duct (12) is fastened longitudinally on the main tank (11) by means of a fastening area (121).

5. The device for filtering of liquid and filling for a household electrical appliance as claimed in the preceding claim, wherein the device for filtering and filling comprises a recess (122) between the emptying duct (12) and the deformable pressing area (111), such as to limit the deformation of the emptying duct (12) when the deformable pressing area (111) is deformed by the user.

6. The device for filtering of liquid and filling for a household electrical appliance as claimed in the preceding claim, wherein the recess (122) extends from the distal end (116) to the fastening area (121).

7. The device for filtering of liquid and filling for a household electrical appliance as claimed in any one of the preceding claims, wherein the groove is circular.

8. The device for filtering of liquid and filling for a household electrical appliance as claimed in any one of the preceding claims, wherein the main tank (11) comprises a reinforcement area (113) at the distal end (116).

9. The device for filtering of liquid and filling for a household electrical appliance as claimed in the preceding claim, and as claimed in either of claims 7 or 8, wherein the reinforcement area (113) is in contact with the groove (112) which assists the deformation.

10. The device for filtering of liquid and filling for a household electrical appliance as claimed in any one of the preceding claims, wherein the main filtering device (3) comprises a dissipater (33) which is designed to distribute the liquid to be filtered over the entire surface of the input grid (345).

11. The device for filtering of liquid and filling for a household electrical appliance as claimed in any one of the preceding claims, wherein the emptying duct (12) comprises an emptying spout (13) which is designed to come into contact with a tank for liquid of the household electrical appliance, said emptying spout (13) comprising a filtering device (131).

12. The device for filtering of liquid and filling for a household electrical appliance as claimed in the preceding claim, wherein the emptying spout (13) comprises a venting device (132) which is designed to allow air to pass between said emptying spout (13) and said tank of the household electrical appliance.

13. A household electrical appliance comprising a device for vaporization of liquid connected to a tank of liquid to be vaporized, and a device for filtering of liquid and filling as claimed in any one of the preceding claims, the duct for emptying the main tank of the device for filtering of liquid and filling being designed to convey the filtered liquid from the main tank of the device to the tank of liquid to be vaporized when the deformable pressing area is deformed by the user.

14. The household electrical appliance as claimed in claim 13, wherein the household electrical appliance additionally comprises a first arm comprising a first contact surface which is designed to come into contact with a lock of hair, and a second arm comprising a second contact surface, which is advantageously heating, and is designed to come into contact with the lock of hair, said first and second arms being articulated to one another such as to form a smoothing tong.

15. The household electrical appliance as claimed in claims 13 and 14, wherein the vaporization device and the tank of liquid to be vaporized are incorporated in said first arm and/or said second arm.

## Patentansprüche

1. Vorrichtung zum Filtern von Wasser und Befüllen für ein elektrisches Haushaltsgerät, umfassend:
- eine Hauptfiltervorrichtung (3), die dafür vorgesehen ist, das Wasser zu demineralisieren;
- einen Hauptkörper (1), umfassend:
- einen Haupttank (11), der einen Druckbereich (111) umfasst, der unter dem manuellen Druck eines Benutzers verformbar ist;
- eine Leitung (12) zum Entleeren des Haupttanks (11), wobei die Entleerungsleitung (12) dafür vorgesehen ist, das demineralisierte Wasser aus dem Haupttank (11) zu einem Tank eines elektrischen Haushaltsgeräts zu befördern, wenn der verformbare Druckbereich (111) vom Benutzer verformt wird,
**dadurch gekennzeichnet, dass** der Haupttank (11) der Hauptfiltervorrichtung (3) nachgelagert ist, um das durch die Hauptfiltervorrichtung (3) demineralisierte Wasser aufzunehmen und zu speichern, wobei die Hauptfiltervorrichtung (3) einen Filtertank (34) umfasst, wobei der Filtertank (34) ein Filterelement (341), das dafür ausgelegt ist, mit dem zu filternden Wasser mechanisch und/oder chemisch wechselzuwirken, um den Kalkanteil im Wasser zu verringern, ein Eingangsgitter (345) und ein Ausgangsgitter (346), durch die das zu demineralisierende Wasser in den Filtertank eintritt bzw. das demineralisierte Wasser aus dem Filtertank austritt, umfasst, wobei sich der Haupttank (11) zwischen einem proximalen Ende (115), das eine Auflagefläche für den Haupttank (11) bildet, und einem distalen Ende (116) gegenüber erstreckt, wobei der Haupttank (11) eine Nut umfasst, die die Verformung (112) an dem distalen Ende (116) fördert.

2. Vorrichtung zum Filtern von Flüssigkeit und Befüllen für ein elektrisches Haushaltsgerät nach Anspruch 1, wobei die Hauptfiltervorrichtung (3) einen dem Haupttank (11) vorgelagerten Aufnahmeraum (31) umfasst, um eine Speicherung der zu filternden Flüssigkeit zu erlauben.

3. Vorrichtung zum Filtern von Flüssigkeit und Befüllen für ein elektrisches Haushaltsgerät nach einem der vorhergehenden Ansprüche, wobei die Entleerungsleitung (12) auf der Außenseite des Haupttanks (11) positioniert ist.

4. Vorrichtung zum Filtern von Flüssigkeit und Befüllen für ein elektrisches Haushaltsgerät nach dem vorhergehenden Anspruch, wobei die Entleerungsleitung (12) in Längsrichtung mittels eines Befestigungsbereichs (121) auf dem Haupttank (11) befestigt ist.

5. Vorrichtung zum Filtern von Flüssigkeit und Befüllen für ein elektrisches Haushaltsgerät nach dem vorhergehenden Anspruch, wobei die Vorrichtung zum Filtern und Befüllen eine Aussparung (122) zwischen der Entleerungsleitung (12) und dem verformbaren Druckbereich (111) umfasst, um die Verformung der Entleerungsleitung (12) zu begrenzen, wenn der verformbare Druckbereich (111) vom Benutzer verformt wird.

6. Vorrichtung zum Filtern von Flüssigkeit und Befüllen für ein elektrisches Haushaltsgerät nach dem vorhergehenden Anspruch, wobei sich die Aussparung (122) von dem distalen Ende (116) zu dem Befestigungsbereich (121) erstreckt.

7. Vorrichtung zum Filtern von Flüssigkeit und Befüllen für ein elektrisches Haushaltsgerät nach einem der vorhergehenden Ansprüche, wobei die Nut kreisförmig ist.

8. Vorrichtung zum Filtern von Flüssigkeit und Befüllen für ein elektrisches Haushaltsgerät nach einem der vorhergehenden Ansprüche, wobei der Haupttank (11) einen Verstärkungsbereich (113) an dem distalen Ende (116) umfasst.

9. Vorrichtung zum Filtern von Flüssigkeit und Befüllen für ein elektrisches Haushaltsgerät nach dem vorhergehenden Anspruch und nach einem der Ansprüche 7 oder 8, wobei der Verstärkungsbereich (113) in Kontakt mit der Nut (112) steht, die die Verformung fördert.

10. Vorrichtung zum Filtern von Flüssigkeit und Befüllen für ein elektrisches Haushaltsgerät nach einem der vorhergehenden Ansprüche, wobei die Hauptfiltervorrichtung (3) einen Dissipator (33) umfasst, der dafür vorgesehen ist, die zu filternde Flüssigkeit über die gesamte Oberfläche des Eingangsgitters (345) zu verteilen.

11. Vorrichtung zum Filtern von Flüssigkeit und Befüllen für ein elektrisches Haushaltsgerät nach einem der vorhergehenden Ansprüche, wobei die Entleerungsleitung (12) eine Entleerungstülle (13) umfasst, die dafür vorgesehen ist, mit einem Tank für Flüssigkeit des elektrischen Haushaltsgeräts in Kontakt zu kommen, wobei die Entleerungstülle (13) eine Filtervorrichtung (131) umfasst.

12. Vorrichtung zum Filtern von Flüssigkeit und Befüllen für ein elektrisches Haushaltsgerät nach dem vorhergehenden Anspruch, wobei die Entleerungstülle (13) eine Entlüftungsvorrichtung (132) umfasst, die dafür vorgesehen ist, Luft zwischen der Entleerungstülle (13) und dem Tank des elektrischen Haushaltsgeräts passieren zu lassen.

13. Elektrisches Haushaltsgerät, das eine Vorrichtung zur Verdampfung von Flüssigkeit, die mit einem Tank von zu verdampfender Flüssigkeit verbunden ist, und eine Vorrichtung zum Filtern von Flüssigkeit und Befüllen nach einem der vorhergehenden Ansprüche umfasst, wobei die Leitung zum Entleeren des Haupttanks der Vorrichtung zum Filtern von Flüssigkeit und Befüllen dafür vorgesehen ist, die gefilterte Flüssigkeit aus dem Haupttank der Vorrichtung zu dem Tank von zu verdampfender Flüssigkeit zu befördern, wenn der verformbare Druckbereich vom Benutzer verformt wird.

14. Elektrisches Haushaltsgerät nach Anspruch 13, wobei das elektrische Haushaltsgerät zusätzlich einen ersten Arm, der eine erste Kontaktoberfläche umfasst, die dafür vorgesehen ist, mit einer Haarlocke in Kontakt zu kommen, und einen zweiten Arm, der eine zweite Kontaktoberfläche umfasst, die vorteilhaft heizend ist und dafür vorgesehen ist, mit der Haarlocke in Kontakt zu kommen, umfasst, wobei der erste und der zweite Arm gelenkig miteinander verbunden sind, um ein Glätteisen zu bilden.

15. Elektrisches Haushaltsgerät nach den Ansprüchen 13 und 14, wobei die Verdampfungsvorrichtung und der Tank von zu verdampfender Flüssigkeit in dem ersten Arm und/oder dem zweiten Arm eingebaut sind.

## Revendications

1. Dispositif de filtration d'eau et de remplissage pour un appareil électroménager comprenant :
- un dispositif de filtration principal (3) conçu pour déminéraliser l'eau ;
- un corps principal (1) comprenant :
- un réservoir principal (11) comprenant une zone d'appui (111) qui est déformable sous la pression manuelle d'un utilisateur ;
- une conduite (12) de vidange du réservoir principal (11), ladite conduite de vidange (12) étant conçue pour acheminer l'eau déminéralisée depuis le réservoir principal (11) vers un réservoir d'un appareil électroménager lorsque la zone d'appui (111) déformable est déformée par l'utilisateur,
**caractérisé en ce que** le réservoir principal (11) est situé en aval du dispositif de filtration principal (3) de manière à recevoir et stocker l'eau déminéralisée par ledit dispositif de filtration principal (3), le dispositif de filtration principal (3) comprenant un réservoir de filtration (34), le réservoir de filtration (34) comprenant un élément filtrant (341) qui est configuré pour interagir mécaniquement et/ou chimiquement avec l'eau à filtrer de manière à diminuer la teneur en calcaire de l'eau, une grille d'entrée (345) et une grille de sortie (346), respectivement au travers desquelles l'eau à déminéraliser entre dans le réservoir de filtration et l'eau déminéralisée sort du réservoir de filtration, le réservoir principal (11) s'étendant entre une extrémité proximale (115) formant une surface de support pour le réservoir principal (11) et une extrémité distale (116) opposée, le réservoir principal (11) comprenant une gorge qui favorise la déformation (112) au niveau de l'extrémité distale (116).

2. Dispositif de filtration de liquide et de remplissage pour un appareil électroménager selon la revendication 1, dans lequel le dispositif de filtration principal (3) comprend un espace d'attente (31) en amont du réservoir principal (11) de manière à permettre le stockage du liquide à filtrer.

3. Dispositif de filtration de liquide et de remplissage pour un appareil électroménager selon l'une quelconque des revendications précédentes, dans lequel la conduite de vidange (12) est disposée à l'extérieur du réservoir principal (11).

4. Dispositif de filtration de liquide et de remplissage pour un appareil électroménager selon l'une quelconque des revendications précédentes, dans lequel la conduite de vidange (12) est accrochée longitudinalement au réservoir principal (11) par une zone d'accroche (121).

5. Dispositif de filtration de liquide et de remplissage pour un appareil électroménager selon l'une quelconque des revendications précédentes, le dispositif de filtration et de remplissage comprenant un évidement (122) entre la conduite de vidange (12) et la zone d'appui (111) déformable, de manière à limiter la déformation de la conduite de vidange (12) lorsque la zone d'appui (111) déformable est déformée par l'utilisateur.

6. Dispositif de filtration de liquide et de remplissage pour un appareil électroménager selon l'une quelconque des revendications précédentes, dans lequel l'évidement (122) s'étend depuis l'extrémité distale (116) vers la zone d'accroche (121).

7. Dispositif de filtration de liquide et de remplissage pour un appareil électroménager selon l'une quelconque des revendications précédentes, dans lequel la gorge est circulaire.

8. Dispositif de filtration de liquide et de remplissage pour un appareil électroménager selon l'une quelconque des revendications précédentes, dans lequel le réservoir principal (11) comprend une zone de renfort (113) au niveau de l'extrémité distale (116).

9. Dispositif de filtration de liquide et de remplissage pour un appareil électroménager selon la revendication précédente et selon l'une quelconque des revendications 7 ou 8, dans lequel la zone de renfort (113) est au contact de la gorge (112) qui favorise la déformation.

10. Dispositif de filtration de liquide et de remplissage pour un appareil électroménager selon l'une quelconque des revendications précédentes, dans lequel le dispositif de filtration principal (3) comprend un éclateur (33) qui est conçu pour répartir le liquide à filtrer sur toute la surface de la grille d'entrée (345).

11. Dispositif de filtration de liquide et de remplissage pour un appareil électroménager selon l'une quelconque des revendications précédentes, dans lequel la conduite de vidange (12) comprend un bec de vidange (13) qui est conçu pour venir au contact d'un réservoir de liquide de l'appareil électroménager, ledit bec de vidange (13) comportant un dispositif de filtration (131).

12. Dispositif de filtration de liquide et de remplissage pour un appareil électroménager selon la revendication précédente, dans lequel le bec de vidange (13) comporte un dispositif de mise à l'air (132) qui est conçu pour laisser passer l'air entre ledit bec de vidange (13) et ledit réservoir de l'appareil électroménager.

13. Appareil électroménager comportant un dispositif de vaporisation de liquide connecté à un réservoir de liquide à vaporiser et un dispositif de filtration de liquide et de remplissage selon l'une quelconque des revendications précédentes, la conduite de vidange du réservoir principal du dispositif de filtration de liquide et de remplissage étant conçue pour acheminer le liquide filtré depuis le réservoir principal du dispositif vers le réservoir de liquide à vaporiser lorsque la zone d'appui déformable est déformée par l'utilisateur.

14. Appareil électroménager selon la revendication 13, l'appareil électroménager comprenant en outre un premier bras comprenant une première surface de contact qui est conçue pour venir au contact d'une mèche de cheveux et un deuxième bras comprenant une deuxième surface de contact, qui est avantageusement chauffante, et est conçue pour venir au contact de la mèche de cheveux, lesdits premier et deuxième bras étant articulés entre eux de manière à former une pince de lissage.

15. Appareil électroménager selon les revendications 13 et 14, dans lequel le dispositif de vaporisation et le réservoir de liquide à vaporiser sont intégrés dans ledit premier bras et/ou ledit deuxième bras.
